# EUROPÄISCHE PATENTSCHRIFT

(11) **EP 2 572 142 B1**
(45) Veröffentlichungstag und Bekanntmachung des Hinweises auf die Patenterteilung: **13.08.2014**
(21) Anmeldenummer: 11718119.8
(22) Anmeldetag: 10.05.2011
(51) Int. Cl.: F23N 1/00, F23K 5/00, F16K 11/22, F16K 31/08

(54) **GASVENTILEINHEIT FÜR EINEN ZWEIKREISBRENNER**
GAS VALVE UNIT FOR A DUAL CIRCUIT BURNER
UNITÉ VALVE À GAZ POUR UN BRÛLEUR À DEUX CIRCUITS

(30) Priorität: 20.05.2010 EP 10290272
(43) Veröffentlichungstag der Anmeldung: 27.03.2013
(73) Patentinhaber: BSH Bosch und Siemens Hausgeräte GmbH, 81739 München (DE)
(72) Erfinder: NAUMANN, Jörn, 77770 Durbach (DE); CADEAU, Christophe, F-67100 Strasbourg (FR)
(86) Internationale Anmeldenummer: PCT/EP2011/057479
(87) Internationale Veröffentlichungsnummer: WO 2011/144491

(56) Entgegenhaltungen:
- EP-A2- 0 818 655
- EP-A2- 2 312 212
- WO-A1-2009/010400
- WO-A2-2008/141916
- DE-A1- 10 249 938

## Beschreibung

Die Erfindung betrifft eine Gasventileinheit zum Einstellen von Gasvolumenströmen zu einem Zweikreis-Gasbrenner eines Gasgeräts, insbesondere eines Gaskochgeräts, wobei die Gasventileinheit einen Gaseingang und zwei Gasausgänge aufweist.

In Gaskochgeräten werden häufig Gasbrenner eingesetzt, die zwei konzentrisch angeordnete Ringe mit Gasaustrittsöffnungen aufweisen. Während des Betriebs der Gaskochstelle kann an jedem der Ringe mit Gasaustrittsöffnungen ein Flammenring brennen. Wenn die Gasvolumenströme zu den beiden Ringen mit Gasaustrittsöffnungen getrennt voneinander einstellbar sind, werden diese Gasbrenner als Zweikreis-Gasbrenner bezeichnet. Im Vergleich zu herkömmlichen Gasbrennern mit nur einem Flammenring besitzen Zweikreis-Gasbrenner in der Regel eine größere maximale Brennleistung. Darüber hinaus besitzen Zweikreis-Gasbrenner eine besonders große Spreizung zwischen minimaler Brennleistung und maximaler Brennleistung. Bei maximaler Brennleistung brennen beide Flammenringe mit größtmöglichen Flammen. Bei minimaler Brennleistung brennt nur der kleinere Flammenring mit möglichst kleinen Flammen, während aus dem größeren Ring mit Flammenaustrittsöffnungen kein Gas ausströmt.

Gasventile zur Versorgung von Zweikreis-Gasventilen besitzen einen Gaseingang, mit dem das Gasventil an eine Hauptgasleitung des Gaskochgeräts angeschlossen ist. Ein erster Gasausgang des Gasventils mündet in eine zu dem kleineren Ring mit Gasaustrittsöffnungen führende erste Teilgasleitung. Ein zweiter Gasausgang ist an eine zu dem größeren Ring mit Gasaustrittsöffnungen führende zweite Teilgasleitung angeschlossen. Ein solches Gasventil für einen Zweikreis-Gasbrenner ist beispielsweise in der WO 2008/141916 A2 beschrieben.

Zweikreis-Gasventile besitzen ein einziges Betätigungselement, mit dem sowohl der Gasstrom zur Versorgung des ersten Flammenrings als auch der Gasstrom zur Versorgung des zweiten Flammenrings eingestellt werden kann. Gemäß einer ersten möglichen Bauform des Zweikreis-Gasventils wird, ausgehend von einem vollständig geschlossenen Zweikreis-Gasventil, bei Betätigung des Betätigungselements zunächst der Gasstrom zu dem kleineren Ring mit Gasaustrittsöffnungen geöffnet. Anschließend, wenn der kleinere Flammenring seine Maximalleistung erreicht hat, wird zusätzlich der Gasstrom zu dem größeren Ring mit Gasaustrittsöffnungen geöffnet, bis auch der größere Flammenring seine Maximalleistung erreicht hat. Gemäß einer zweiten möglichen Bauform folgt auf die vollständig geschlossene Stellung des Zweikreis-Gasventils unmittelbar die Schaltstellung für die Maximalleistung beider Flammenringe. Eine weitere Betätigung des Bedienelements reduziert zunächst die Leistung des größeren Flammenrings, bis dieser vollständig erloschen ist. Anschließend wird die Leistung des kleineren Flammenrings reduziert, bis dieser seine Minimalleistung erreicht hat. Bei beiden Ausführungsformen ist in Abhängigkeit von der Stellung des Betätigungselements entweder das Zweikreis-Gasventils vollständig geschlossen oder ausschließlich der Gasstrom zu dem kleineren Ring mit Gasaustrittsöffnungen geöffnet oder der Gasstrom zu beiden Ringen mit Gasaustrittsöffnungen geöffnet. Es ist hingegen nicht vorgesehen, den Gasstrom zu dem kleineren Ring mit Gasaustrittsöffnungen zu schließen, während der Gasstrom zu dem größeren Ring mit Gasaustrittsöffnungen geöffnet ist.

Bekannte Gasventileinheiten für Zweikreis-Gasbrenner sind in der Regel als Kükenventile ausgeführt, bei denen mittels des Betätigungselement ein Ventilküken in einem Ventilgehäuse gedreht wird. Bei diesen bekannten Ventilen erweist sich das exakte Einstellen einer gewünschten Brennleistung sowie die Reproduzierbarkeit einer solchen Einstellung als schwierig. Ein Beispiel einer Einstellvorrichtung einer Gashahnvorrichtung, die auch für Zweikreis-Brenner verwendet werden kann, ist beispielsweise in der WO 2009 / 010400 A1, welche den Oberbegriff des Anspruchs 1 offenbart, beschrieben. Hierbei umfasst die Einstellvorrichtung mindestens eine Kanaleinheit, über die der Gaszufluss zu den Gasauslässen mittels einer Einstelleinheit eingestellt werden kann. Als Einstelleinheit dient hierbei ein drehbarer hülsenförmiger Grundkörper, in dessen Außenseite Ausnehmungen für das Öffnen des Hohlraums zu einem oder mehreren Kanälen der Kanaleinheit vorgesehen sind.

Darüber hinaus ist in der nachveröffentlichten Anmeldung EP 2 312 212 A2 eine Gaskochstelle mit Zweikreis-Brenner beschrieben, bei der eine Gasversorgungseinheit verwendet wird, die in zwei Leistungsbereichen betrieben werden kann und in dem ersten Leistungsbereich der Gasstrom zu dem Innenbrenner zumindest zeitweise geöffnet ist, und der Gasstrom zu dem Außenbrenner unterbrochen ist. In einem zweiten Leistungsbereich kann zusätzlich der Gasstrom zu dem Außenbrenner zumindest zeitweise geöffnet sein.

Der vorliegenden Erfindung liegt die Aufgabe zu Grunde, eine gattungsgemäße Gasventileinheit zur Verfügung zu stellen, bei der die Einstellbarkeit verbessert ist.

Diese Aufgabe wird erfindungsgemäß dadurch gelöst, dass der einem ersten Gasausgang zugeführte Gasvolumenstrom mehrstufig einstellbar ist und dass der einem zweiten Gasausgang zugeführte Gasvolumenstrom ebenfalls mehrstufig einstellbar ist. Der Gasvolumenstrom zu jedem der beiden Gasausgänge ist in mehreren Stufen diskret schaltbar. Eine Einstellbarkeit von Zwischenstufen ist nicht vorgesehen. Jede einzelne Schaltstufe kann von einer Bedienperson der Gasventileinheit explizit angewählt werden und ist reproduzierbar. Erfindungsgemäß ist die Gasventileinheit dadurch gekennzeichnet, dass die Gasventileinheit zum Einstellen des dem ersten Gasausgang zugeführten Gasvolumenstroms mindestens zwei erste Auf-Zu-Ventile und mindestens zwei erste Drosselstellen aufweist, die Gasventileinheit eine erste Drosselstrecke umfasst, in der die ersten Drosselstellen in Reihe angeordnet sind und die jeweils zwischen zwei benachbarten ersten Drosselstellen einen Verbindungsabschnitt aufweisen, welchen ein erstes Auf-Zu-Ventil in geöffnetem Zustand mit dem Gaseingang verbindet

Erfindungsgemäß weist die Gasventileinheit zum Einstellen des dem ersten Gasausgang zugeführten Gasvolumenstroms mindestens zwei erste Auf-Zu-Ventile und mindestens zwei erste Drosselstellen, vorzugsweise mindestens drei erste Auf-Zu-Ventile und mindestens drei erste Drosselstellen auf. Die Auf-Zu-Ventile und die Drosselstellen sind Bestandteil der Gasventileinheit. Jede der Drosselstellen besitzt einen definierten Strömungsquerschnitt und ist geeignet, die Größe eines Gasvolumenstroms exakt und reproduzierbar zu definieren. Mittels der Auf-Zu-Ventile wird festgelegt, welche der Drosselstellen von Gas durchströmt werden und welche nicht. Die Auf-Zu-Ventile werden direkt oder indirekt von der Bedienperson mittels eines Betätigungselements betätigt.

Gleiches gilt für die Einstellung des Gasvolumenstroms zum zweiten Gasausgang. So weist die Gasventileinheit zum Einstellen des dem zweiten Gasausgang zugeführten Gasvolumenstroms mindestens zwei zweite Auf-Zu-Ventile und mindestens zwei zweite Drosselstellen, vorzugsweise mindestens vier zweite Auf-Zu-Ventile und mindestens vier zweite Drosselstellen, auf. Dem zweiten Gasausgang sind vorzugsweise mehr Auf-Zu-Ventile und mehr Drosselstellen zugeordnet als dem ersten Gasausgang, da der Leistungsbereich des dem zweiten Gasausgang zugeordneten zweiten Flammenrings größer ist und sich hier eine größere Anzahl von Schaltstufen als zweckmäßig erweist.

Mit besonderem Vorteil ist zum Steuern der Auf-Zu-Ventile mindestens ein magnetisch wirksamer Körper, vorzugsweise mindestens ein Permanentmagnet vorgesehen, der relativ zu den Auf-Zu-Ventilen bewegbar ist. Die Auf-Zu-Ventile werden dort wegen des vorzugsweise als Permanentmagnet ausgeführten magnetisch wirksamen Körpers betätigt. Beispielsweise können Ventilkörper der Auf-Zu-Ventile aus ferritischem, aber nicht dauerhaft magnetisiertem Material bestehen, auf welches mit dem bewegbaren Permanentmagnet eine Anziehungskraft ausgeübt wird. Hierbei werden nur diejenigen Ventilkörper von dem Permanentmagnet angezogen und dadurch die betreffenden Auf-Zu-Ventile geöffnet, die sich in unmittelbarer räumlicher Nähe des Permanentmagneten befindet. Wenn der Permanentmagnet von diesem Auf-Zu-Ventil wieder wegbewegt wird, schließt das Auf-Zu-Ventil automatisch. Alternativ ist es möglich, die Ventilkörper der Auf-Zu-Ventile aus permanentmagnetischem Material auszubilden, während der bewegbare magnetisch wirksame Körper aus ferritischem, aber nicht dauerhaft magnetisiertem Material besteht. Damit kann die gleiche Funktionsweise erreicht werden.

Eine Weiterbildung dieser Anordnung sieht vor, dass mindestes zwei magnetisch wirksame Körper, vorzugsweise mindestens zwei Permanentmagnete vorgesehen sind, wobei ein erster magnetisch wirksamer Körper zur Steuerung der ersten Auf-Zu-Ventile und ein zweiter magnetisch wirksamer Körper zur Steuerung der zweiten Auf-Zu-Ventile vorgesehen ist. Die Position des ersten magnetisch wirksamen Körpers steuert den Gasvolumenstrom zum ersten Gasausgang, während die Position des zweiten magnetisch wirksamen Körpers den Gasvolumenstrom zum zweiten Gasausgang steuert. Möglich ist es, die Bewegung der beiden magnetisch wirksamen Körper aneinander zu koppeln. Die magnetisch wirksamen Körper können jedoch auch unabhängig voneinander bewegt werden.

Eine vorteilhafte Weiterbildung der Erfindung sieht vor, dass eine Bewegungsvorrichtung zum Bewegen des mindestens einen, vorzugsweise als Permanentmagnet ausgeführten magnetisch wirksamen Körpers relativ zu den Auf-Zu-Ventilen vorgesehen ist, derart, dass ausgehend von einer vollständig geschlossenen Gasventileinheit durch Betätigung der Bewegungsvorrichtung zunächst die dem ersten Gasausgang zugeordneten Auf-Zu-Ventile betätigt werden und anschließend die dem zweiten Gasausgang zugeordneten Auf-Zu-Ventile betätigt werden. Diese Anordnung sieht vor, dass bei einer Inbetriebnahme des Gasbrenners zunächst der kleinere Flammenring gezündet wird und anschließend, wenn der kleinere Flammenring seine Maximalleistung erreicht hat, der größere Flammenring gezündet wird. Hierbei stehen sowohl für den kleineren Flammenring als auch für den größeren Flammenring mehrere Leistungsstufen zur Verfügung. Während der größere Flammenring brennt, wird der kleinere Flammenring fortlaufend mit Maximalleistung betrieben.

Bevorzugt sind in Abhängigkeit von der Position des ersten magnetisch wirksamen Körpers entweder kein erstes Auf-Zu-Ventil oder genau ein erstes Auf-Zu-Ventil oder genau zwei erste Auf-Zu-Ventile geöffnet. Analog hierzu sind in Abhängigkeit von der Position des zweiten magnetisch wirksamen Körpers entweder kein zweites Auf-Zu-Ventil oder genau ein zweites Auf-Zu-Ventil oder genau zwei zweite Auf-Zu-Ventile geöffnet. Die Auf-Zu-Ventile werden dabei fortlaufend nacheinander geöffnet. Wenn der magnetisch wirksame Körper von einem Auf-Zu-Ventil zum nächsten Auf-Zu-Ventil bewegt wird, sind während einer Umschaltphase beide Auf-Zu-Ventile geöffnet. Wenn der bewegbare magnetisch wirksame Körper genau im Bereich eines Auf-Zu-Ventils angeordnet ist, ist nur dieses Auf-Zu-Ventil geöffnet.

Eine mögliche Ausführung der Erfindung sieht vor, dass die Bewegungsvorrichtung derart ausgeführt ist, dass bei einer Schaltposition der Gasventileinheit, in der mindestens ein erstes Auf-Zu-Ventil geöffnet ist und alle zweiten Auf-Zu-Ventile geschlossen sind, der zweite magnetisch wirksame Körper synchron zu dem ersten magnetisch wirksamen Körper bewegt wird. In diesen Schaltpositionen steht dem zweiten magnetisch wirksamen Körper kein zweites Auf-Zu-Ventil gegenüber, welches mittels Magnetkraft geöffnet werden könnte. Dennoch wird der zweite magnetisch wirksame Körper mit dem ersten magnetisch wirksamen Körper mit bewegt.

Weiter ist die Bewegungsvorrichtung derart ausgeführt ist, dass bei einer Schaltposition der Gasventileinheit, in der mindestens ein zweites Auf-Zu-Ventil geöffnet ist, der erste magnetisch wirksame Körper bei einer Bewegung des zweiten magnetisch wirksamen Körpers nicht mitbewegt wird. Der Bewegungsweg des ersten magnetisch wirksamen Körpers wird hierbei beispielsweise mittels eines Anschlags begrenzt. In diesen Schaltpositionen bewegt sich also nur der zweite magnetisch wirksame Körper.

Hierzu ist die Bewegungsvorrichtung derart ausgeführt ist, dass bei zumindest einem geöffneten zweiten Auf-Zu-Ventil gleichzeitig mindestens ein erstes Auf-Zu-Ventil, vorzugsweise genau ein erstes Auf-Zu-Ventil geöffnet ist. Der erste magnetisch wirksame Körper wird dabei beispielsweise mittels des genannten Anschlags in einer Position festgelegt, in der der erste magnetisch wirksame Körper ein erstes Auf-Zu-Ventil öffnet. In der Regel ist es dasjenige erste Auf-Zu-Ventil, bei dem der Gasvolumenstrom zu dem ersten Gasausgang minimal groß ist.

Erfindungsgemäß umfasst die Gasventileinheit eine erste Drosselstrecke, in der die ersten Drosselstellen in Reihe angeordnet sind und die jeweils zwischen zwei benachbarten ersten Drosselstellen einen Verbindungsabschnitt aufweist, welchen Verbindungsabschnitt jeweils ein erstes Auf-Zu-Ventil in geöffnetem Zustand mit dem Gaseingang verbindet. Die Drosselstellen befinden sich hintereinander und sind in Reihe angeordnet. In Abhängigkeit davon, welches Auf-Zu-Ventil geöffnet ist, führt der Gasstrom durch eine, zwei oder mehrere Drosselstellen.

Analog hierzu umfasst die Gasventileinheit eine zweite Drosselstrecke, in der die zweiten Drosselstellen in Reihe angeordnet sind und die jeweils zwischen zwei benachbarten zweiten Drosselstellen einen Verbindungsabschnitt aufweisen, welchen jeweils ein zweites Auf-Zu-Ventil in geöffnetem Zustand mit dem Gaseingang verbindet.

Die Drosselstellen der ersten Drosselstrecke weisen - in Gasströmungsrichtung in der ersten Drosselstrecke betrachtet - einen zunehmenden Strömungsquerschnitt auf. Analog hierzu weisen auch die Drosselstellen der zweiten Drosselstrecke - in Gasströmungsrichtung in der zweiten Drosselstrecke betrachtet - einen zunehmenden Strömungsquerschnitt auf. Damit nimmt in erster Linie diejenige Drosselstelle, die in Gasströmungsrichtung auf das geöffnete Auf-Zu-Ventil folgt, den Gasvolumenstrom zu dem treffenden Gasausgang. Die in der Drosselstrecke folgenden Drosselstellen besitzen einen größeren Strömungsquerschnitt und besitzen eine vergleichsweise geringere Drosselwirkung auf dem Gasvolumenstrom.

Weitere Vorteile und Einzelheiten der Erfindung werden anhand des in den schematischen Figuren dargestellten Ausführungsbeispiels näher erläutert. Dabei zeigt
- Figur 1: einen Zweikreis-Gasbrenner,
- Figur 2: eine erfindungsgemäße Gasventileinheit als Zweikreis-Gasventil,
- Figur 3: die Schaltstellung des geschlossenen Zweikreis-Gasventils,
- Figur 4: die Schaltstellung des Zweikreis-Gasventils zwischen einer ersten und einer zweiten Schaltstellung,
- Figur 5: die Schaltstellung des Zweikreis-Gasventils in einer dritten Schaltstellung,
- Figur 6: die Schaltstellung des Zweikreis-Gasventils in einer vierten Schaltstellung,
- Figur 7: die Schaltstellung des Zweikreis-Gasventils in einer neunten Schaltstellung.

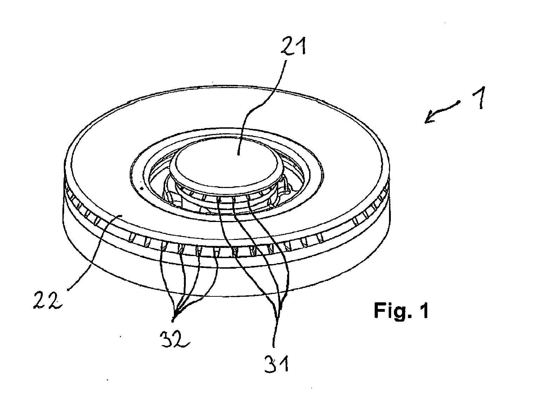

Fig. 1 zeigt einen Zweikreis-Gasbrenner 1, wie er üblicherweise in Gaskochstellen eingesetzt wird. Der Zweikreis-Gasbrenner 1 umfasst einen Innenbrenner 21 mit ersten Gasaustrittsöffnungen 31, und einen Außenbrenner 22 mit zweiten Gasaustrittsöffnungen. 32. Die durch die ersten Gasaustrittsöffnungen 31 und die zweiten Gasaustrittsaustrittsöffnungen 32 austretenden Gasvolumenströme, und damit die Flammengrößen eines ersten Flammenrings am Innenbrenner 21 und eines zweiten Flammenrings am Außenbrenner 22, können getrennt voneinander eingestellt werden. Bei Minimalleistung des Zweikreis-Gasbrenners 1 sind ausschließlich am Innenbrenner 21 Flammen vorhanden. Bei Maximalleistung des Zweikreis-Gasbrenners 1 sind sowohl am Innenbrenner 21 als auch am Außenbrenner 22 Flammen vorhanden. Zwischen der Minimalleistung und der Maximalleistung kann die Leistung des Zweikreis-Gasbrenners 1 stufenweise erhöht werden, indem, ausgehend von der Minimalleistung, zunächst die Flammengröße am Innenbrenner 21 gesteigert wird und anschließend der Außenbrenner 22 zugeschaltet wird, dessen Flammen dann wieder stufenweise vergrößert werden.

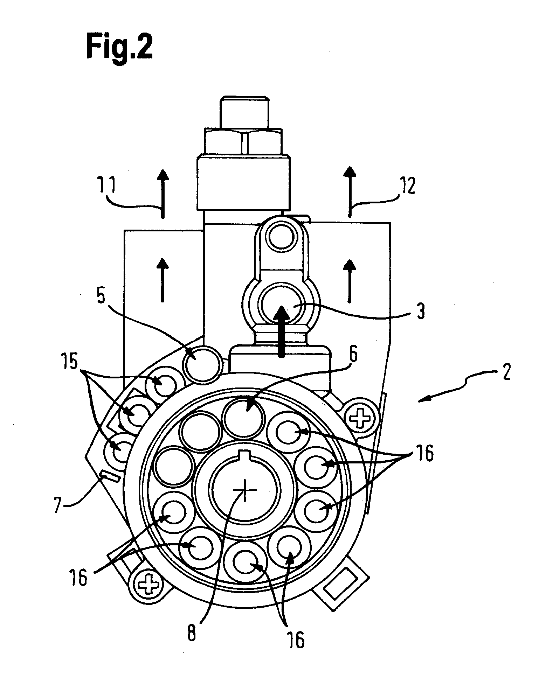

Fig. 2 zeigt eine erfindungsgemäße als Zweikreis-Gasventil 2 ausgeführte Gasventileinheit zur Versorgung eines solchen Zweikreis-Gasbrenners 1. Das Zweikreis-Gasventil 2 besitzt einen einzigen Gaseingang 3, einen ersten Gasausgang 11 und einen zweiten Gasausgang 12. Der erste Gasausgang 11 ist zur Verbindung mit dem Innenbrenner 21 des Zweikreis-Gasbrenners 1 vorgesehen, während der zweite Gasausgang 12 zur Verbindung mit dem Außenbrenner 22 des Zweikreis-Gasbrenners 1 vorgesehen ist. Der Gasstrom zu dem ersten Gasausgang 11 wird durch erste Auf-Zu-Ventile 15 gesteuert, die mittels eines ersten magnetisch wirksamen Körpers 5 betätigbar sind. In analoger Weise wird der Gasstrom zu dem zweiten Gasausgang 12 durch zweite Auf-Zu-Ventile 16 gesteuert, welche mittels eines zweiten magnetisch wirksamen Körpers 6 betätigbar sind.

Die magnetisch wirksamen Körper 5, 6 sind in einer bevorzugten Ausführungsform von jeweils einem Permanentmagneten gebildet. Die Auf-Zu-Ventile 15, 16 besitzen jeweils nicht-magnetisierte ferromagnetische Ventilkörper, auf welche die von Permanentmagneten gebildeten magnetisch wirksamen Körper 5, 6 eine Anziehungskraft ausüben, wenn sie über dem entsprechenden Ventilkörper positioniert sind. In einer alternativen Ausführungsform ist es möglich, die Ventilkörper der Auf-Zu-Ventile 15, 16 als Permanentmagnete auszuführen, während die bewegbaren magnetisch wirksamen Körper 5, 6 aus nicht-magnetisiertem ferromagnetischem Material bestehen.

In der in Fig. 2 dargestellten Position befinden sich die beiden magnetisch wirksamen Körper 5, 6 neben den Auf-Zu-Ventilen 15, 16, so dass keines der Auf-Zu-Ventile 15, 16 geöffnet ist. Das Zweikreis-Gasventil 2 ist dadurch vollständig geschlossen. Bei einer Betätigung des Zweikreis-Gasventils 2 werden die magnetisch wirksamen Körper 5, 6 im Gegenuhrzeigersinn um die Achse 8 bewegt. Die Bewegung der magnetischen wirksamen Körper 5, 6 erfolgt dabei zunächst synchron, bis der erste magnetisch wirksame Körper 5 an einem Anschlag 7 zur Anlage kommt. Anschließend wird nur noch der zweite magnetisch wirksame Körper 6 um die Achse 8 bewegt, während der erste magnetisch wirksame Körper 5 an dem Anschlag 7 verharrt. Im ersten Teil des Bewegungswegs der magnetisch wirksamen Körper 5, 6 wird ausschließlich der erste magnetisch wirksame Körper über Auf-Zu-Ventile 15 bewegt, während sich im Bereich des zweiten magnetisch wirksamen Körpers 6 noch keine Auf-Zu-Ventile 15, 16 befinden. Erst während des zweiten Teils des Bewegungswegs, in dem alleine der zweite magnetisch wirksame Körper 6 bewegt wird, wird dieser über die zweiten Auf-Zu-Ventile 16 geführt, die dabei nacheinander betätigt werden.

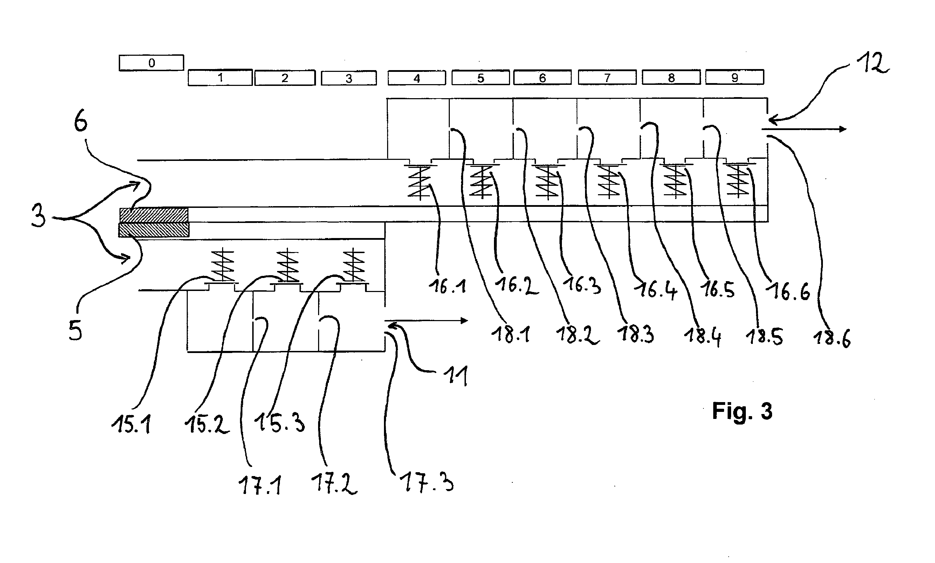

Die Schaltung im Innern des Zweikreis-Gasventils 2 wird im Folgenden anhand der schematischen Figuren 3 bis 7 in verschiedene Schaltstellungen erläutert. Zu erkennen sind jeweils der erste magnetisch wirksame Körper 5, der zweite magnetisch wirksame Körper 6, die ersten Auf-Zu-Ventile 15 (15.1, 15.2, 15.3), die zweiten Auf-Zu-Ventile 16 (16.1 bis 16.6), erste Drosselstellen 17 (17.1, 17.2, 17.3) und zweite Drosselstellen 18 (18.1 bis 18.6). Wenn mindestens ein erstes Auf-Zu-Ventil 15 geöffnet ist, führt ein erster Zweig des Gasstroms von dem Gaseingang 3 über dieses geöffnete erste Auf-Zu-Ventil 15 und durch mindestens eine der Drosselstellen 17 zu dem ersten Gasausgang 11. Wenn mindestens ein zweites Auf-Zu-Ventil 16 geöffnet ist, führt ein zweiter Zweig des Gasstroms von dem Gaseingang 3 über dieses geöffnete zweite Auf-Zu-Ventil 16 und durch mindestens eine der zweiten Drosselstellen 18 zu dem zweiten Gasausgang 12. Die ersten Drosselstellen 17.1, 17.2 und 17.3 weisen drei der Reihe nach größer werdende Querschnitte auf. Der zum ersten Gasausgang 11 strömende Gasvolumenstrom wird maßgeblich nur durch die erste sich im Gasstrom befindende Drosselstelle 17 definiert. Wenn beispielsweise das Auf-Zu-Ventil 15.1 geöffnet ist, bestimmt insbesondere die Drosselstelle 17.1 die Größe des Gasvolumenstroms. Wenn das Auf-Zu-Ventil 15.2 geöffnet ist, bestimmt die Drosselstelle 17.2 den Gasvolumenstrom, bei geöffnetem Auf-Zu-Ventil 15.3 wird der Gasvolumenstrom durch die Drosselstelle 17.3 bestimmt. Die letzte der Drosselstellen 17.3 kann einen derart großen Strömungsquerschnitt aufweisen, dass praktisch keine Drosselung des Gasvolumenstroms mehr erfolgt. Die Schaltung und die Funktionsweise der zweiten Auf-Zu-Ventile 16 in Verbindung mit den zweiten Drosselstellen 18, in dem zu den zweiten Gasausgang 12 führenden Zweig des Gasvolumenstroms ist analog.

Fig. 3 zeigt die Schaltstellung "0" des geschlossenen Zweikreis-Gasventils 1. In dieser Schaltstellung befinden sich die beiden magnetisch wirksamen Körper 5, 6 in der Zeichnung links von den ersten Auf-Zu-Ventilen 15 und den zweiten Auf-Zu-Ventilen 16. Diese Position der magnetisch wirksamen Körper 5, 6 entspricht der in Fig. 2 dargestellten Schaltstellung. Hierbei sind sämtliche Auf-Zu-Ventile 15, 16 mittels Federkraft geschlossen. Das am Gaseingang 3 anstehende Gas kann weder zu dem ersten Gasausgang 11 noch zu dem zweiten Gasausgang 12 strömen.

Wenn die beiden als Permanentmagnet ausgeführten magnetisch wirksamen Körper 5, 6, ausgehend von der Position gemäß Fig. 3, nach in der Zeichnung rechts bewegt werden, öffnet zunächst das erste Auf-Zu-Ventil 15.1. Eine weitere Bewegung der magnetisch wirksamen Körper 5, 6 nach rechts öffnet dann zusätzlich das erste Auf-Zu-Ventil 15.2.

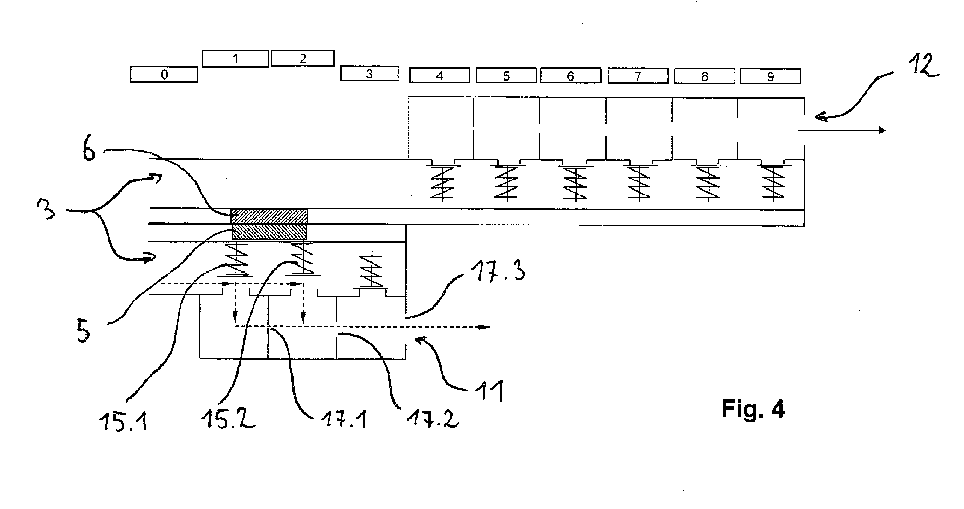

Diese Schaltstellung ist in Fig. 4 abgebildet. Hierbei fließt der größte Teil des zu dem ersten Gasausgang 11 gelangenden Gasstroms durch das geöffnete Auf-Zu-Ventil 15.2 und die Drosselstellen 17.2 und 17.3. Der durch das geöffnete Auf-Zu-Ventil 15.1 und die Drosselstelle 17.1 hinzukommende Gasstrom ist vergleichsweise vernachlässigbär gering. Wenn die magnetisch wirksamen Körper 5, 6 weiter nach in der Zeichnung rechts bewegt werden, schließt das Auf-Zu-Ventil 15.1 und nur das Auf-Zu-Ventil 15.2 bleibt geöffnet. Der dann in dieser Schaltstellung zu dem ersten Gasausgang 11 gelangende Gasvolumenstrom ist praktisch identisch zu dem Gasvolumenstrom in der Schaltstellung gemäß Fig. 4. Für die Funktion des Zweikreis-Gasventils besonders wichtig ist, dass während des Umschaltens von dem geöffneten Auf-Zu-Ventil 15.1 auf das geöffnete Auf-Zu-Ventil 15.2 zwischenzeitlich beide Auf-Zu-Ventile 15.1 und 15.2 geöffnet sind, da dies einen kontinuierlichen Gasfluss gewährleistet und ein ungewolltes Erlöschen der Gasflammen während des Umschaltvorgangs verhindert.

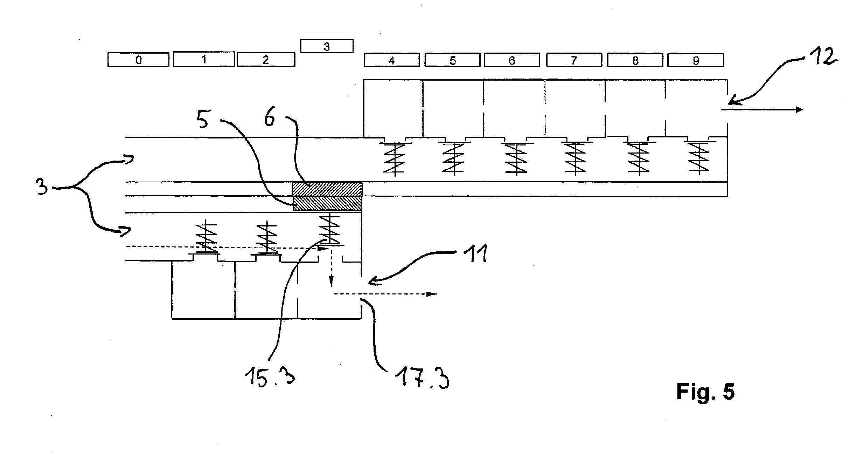

In der in Fig. 5 dargestellten Schaltposition "3" befinden sich die magnetisch wirksamen Körper 5, 6 im Bereich des Auf-Zu-Ventils 15.3. Hierbei ist der Gasvolumenstrom zu dem ersten Gasausgang 11 maximal. Das am Gaseingang 3 eintretende Gas strömt durch das geöffnete Auf-Zu-Ventil 15.3 direkt vor die Drosselstelle 17.3 mit dem größten Öffnungsquerschnitt. Der Gasstrom in Richtung des zweiten Gasausgangs 12 ist in dieser Schaltstellung weiterhin geschlossen.

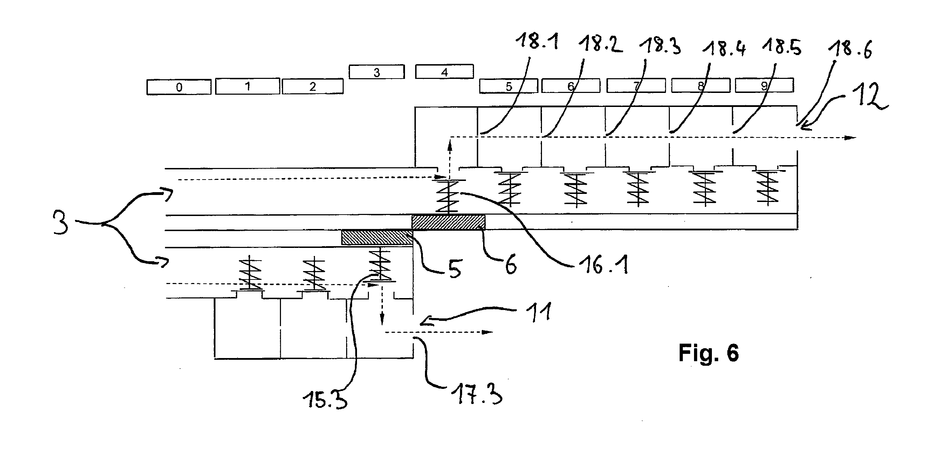

Wenn das Zweikreis-Gasventil 2 nun weiter in Öffnungsrichtung betätigt wird, bleibt der erste magnetisch wirksame Körper 5 in seiner Position gemäß Fig. 6 stehen und nur der zweite magnetisch wirksame Körper 6 bewegt sich weiter.

Diese Schaltstellung "4" ist in Fig. 6 dargestellt. Zu erkennen ist, dass der Strömungsweg zu dem ersten Gasausgang 11 über das geöffnete erste Auf-Zu-Ventil 15.3 geöffnet bleibt und so die Flammen am Innenbrenner 21 des Zweikreis-Gasbrenners 1 mit maximaler Größe weiter brennen. Zusätzlich ist das zweite Auf-Zu-Ventil 16.1 geöffnet, so dass das Gas, ausgehend von dem Gaseingang 3 über dieses geöffnete zweite Auf-Zu-Ventil 16.1 und durch sämtliche zweite Drosselstellen 18.1 bis 18.6 zum zweiten Gasausgang 12 strömen kann. Die Flammen am Außenbrenner 22 des Zweikreis-Gasbrenners 1 brennen dabei mit minimaler Größe, wobei die Größe des Gasvolumenstroms maßgeblich durch den Querschnitt der sich in der Zeichnung ganz links befindlichen zweiten Drosselstelle 18.1 vorgegeben ist.

Wenn das Zweikreis-Gasventil 2 nun weiter in Öffnungsrichtung betätigt wird, öffnen nacheinander die zweiten Auf-Zu-Ventile 16.2 bis 16.6, wobei sichergestellt ist, dass während jedes Umschaltvorgangs stets zwei zweite Auf-Zu-Ventile 16.1 bis 16.6 geöffnet sind und zu keiner Zeit sämtliche zweite Auf-Zu-Ventile 16.1 bis 16.6 geschlossen sind. Das erste Auf-Zu-Ventil 15.3 bleibt hierbei stets geöffnet.

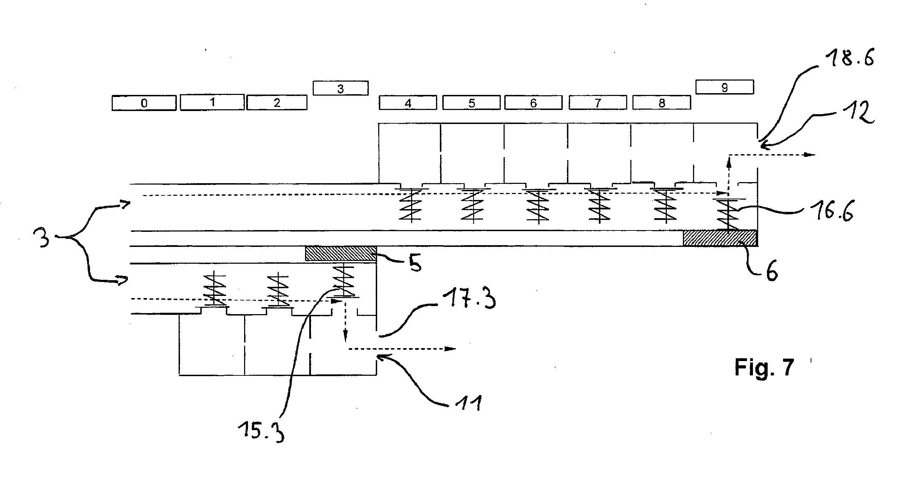

Fig. 7 zeigt das Zweikreis-Gasventil 2 in Schaltstellung "9". Hierbei befindet sich der zweite magnetisch wirksame Körper 6 an seinem rechten Anschlag im Bereich des zweiten Auf-Zu-Ventils 16.6. Der Gasstrom in Richtung des zweiten Gasausgangs 12 strömt hierdurch direkt vom Gaseingang 3 durch das geöffnete zweite Auf-Zu-Ventil 16.6 vor die zweite Drosselstelle 18.6. Der Gasstrom zum zweiten Gasausgang 12 ist hierdurch auf einen Maximalwert eingestellt. Die zweite Drosselstelle 18.6 ist derart groß dimensioniert, dass sie den Gasstrom praktisch nicht drosselt.

Bei einer Betätigung des Zweikreis-Gasventils 2 in Schließrichtung werden die beiden magnetisch wirksamen Körper 5, 6 in umgekehrter Reihenfolge bewegt. Ausgehend von der Schaltstellung "9" wird zunächst nur der zweite magnetisch wirksame Körper zurück bewegt, bis alle zweiten Auf-Zu-Ventile 16 geschlossen sind. Anschließend werden beide magnetisch wirksamen Körper 5, 6 synchron zurück bewegt, bis auch sämtliche erste Auf-Zu-Ventile 15 geschlossen sind. Somit wird beim Zurückschalten zunächst der Gasstrom zum zweiten Gasausgang 12 reduziert wird und anschließend der Gasstrom zum ersten Gasausgang 11.

Eine Betätigung des Zweikreis-Gasventils 2 erfolgt mittels einer geeigneten Bewegungsvorrichtung. Diese kann beispielsweise einen manuell betätigbaren Drehknebels emfassen. Eine Drehung des Drehknebels verschiebt dann die magnetisch wirksamen Körper 5, 6 relativ zu den Auf-Zu-Ventilen 15, 16 in der oben beschriebenen Weise.

Alternativ ist es ebenfalls möglich, die Bewegungsvorrichtung mit einem geeigneten Stellglied, beispielsweise einem elektrischen Schrittmotor oder einer Kombination aus Elektromotor und Getriebe auszustatten. Dieses Stellglied kann dann mittels einer geeigneten elektronischen Steuerung angesteuert werden. Die elektronische Steuerung betätigt das Stellglied dann automatisch oder gemäß dem Ausgangssignal einer mit der Steuerung verbundenen elektronischen Benutzerschnittstelle, die beispielsweise von Touch-Sensoren, Slidern oder abnehmbaren Magnetknebeln gebildet sein kann. Mittels der elektronischen Steuerung kann auch eine teil- oder vollautomatische Steuerung der Gasventileinheit realisiert werden.

### BEZUGSZEICHENLISTE

- 1: Zweikreis-Gasbrenner
- 2: Zweikreis-Gasventil
- 3: Gaseingang
- 5: erster magnetisch wirksamer Körper
- 6: zweiter magnetisch wirksamer Körper
- 7: Anschlag
- 8: Achse
- 11: erster Gasausgang
- 12: zweiter Gasausgang
- 15 (15.1 bis 15.3): erste Auf-Zu-Ventile
- 16 (16.1 bis 16.6.): zweite Auf-Zu-Ventile
- 17 (17.1 bis 17.3): erste Drosselstellen
- 18 (18.1 bis 18.6): zweite Drosselstellen
- 21: Innenbrenner
- 22: Außenbrenner
- 31: erste Gasaustrittsöffnungen
- 32: zweite Gasaustrittsöffnungen

## Patentansprüche

1. Gasventileinheit zum Einstellen von Gasvolumenströmen zu einem Zweikreis-Gasbrenner (1) eines Gasgeräts, insbesondere eines Gaskochgeräts, wobei die Gasventileinheit einen Gaseingang (3) und zwei Gasausgänge (11, 12) aufweist, wobei der einem ersten Gasausgang (11) zugeführte Gasvolumenstrom mehrstufig einstellbar ist und der einem zweiten Gasausgang (12) zugeführte Gasvolumenstrom mehrstufig einstellbar ist **dadurch gekennzeichnet, dass** die Gasventileinheit zum Einstellen des dem ersten Gasausgang (11) zugeführten Gasvolumenstroms mindestens zwei erste Auf-Zu-Ventile (15) und mindestens zwei erste Drosselstellen (17) aufweist, die Gasventileinheit eine erste Drosselstrecke umfasst, in der die ersten Drosselstellen (17) in Reihe angeordnet sind und die jeweils zwischen zwei benachbarten ersten Drosselstellen (17) einen Verbindungsabschnitt aufweisen, welchen ein erstes Auf-Zu-Ventil (15) in geöffnetem Zustand mit dem Gaseingang (3) verbindet.

2. Gasventileinheit nach Anspruch 1, **dadurch gekennzeichnet, dass** die Gasventileinheit zum Einstellen des dem ersten Gasausgang (11) zugeführten Gasvolumenstroms mindestens drei erste Auf-Zu-Ventile (15) und mindestens drei erste Drosselstellen (17) aufweist.

3. Gasventileinheit nach Anspruch 1 oder 2, **dadurch gekennzeichnet, dass** die Gasventileinheit zum Einstellen des dem zweiten Gasausgang (12) zugeführten Gasvolumenstroms mindestens zwei zweite Auf-Zu-Ventile (16) und mindestens zwei zweite Drosselstellen (18), vorzugsweise mindestens vier zweite Auf-Zu-Ventile (16) und mindestens vier zweite Drosselstellen (18) aufweist.

4. Gasventileinheit nach Anspruch 2 oder 3, **dadurch gekennzeichnet, dass** zum Steuern der Auf-Zu-Ventile (15, 16) mindestens ein magnetisch wirksamer Körper (5, 6), vorzugsweise mindestens ein Permanentmagnet vorgesehen ist, der relativ zu den Auf-Zu-Ventilen (15, 16) bewegbar ist.

5. Gasventileinheit nach Anspruch 4, **dadurch gekennzeichnet, dass** mindestens zwei magnetisch wirksame Körper (5, 6), vorzugsweise mindestens zwei Permanentmagnete vorgesehen sind, wobei ein erster magnetisch wirksamer Körper (5) zur Steuerung der ersten Auf-Zu-Ventile (15) und ein zweiter magnetisch wirksamer Körper (6) zur Steuerung der zweiten Auf-Zu-Ventile (16) vorgesehen ist.

6. Gasventileinheit nach Anspruch 4 oder 5, **dadurch gekennzeichnet, dass** eine Bewegungsvorrichtung zum Bewegen des mindestens einen vorzugsweise als Permanentmagnet ausgeführten magnetisch wirksamen Körpers (5, 6) relativ zu den Auf-Zu-Ventilen (15, 16) vorgesehen ist, derart, dass ausgehend von einer vollständig geschlossenen Gasventileinheit durch Betätigung der Bewegungsvorrichtung zunächst die dem ersten Gasausgang (11) zugeordneten Auf-Zu-Ventile (15) betätigt werden und anschließend die dem zweiten Gasausgang zugeordneten Auf-Zu-Ventile (16) betätigt werden.

7. Gasventileinheit nach Anspruch 5 oder 6, **dadurch gekennzeichnet, dass** in Abhängigkeit von der Position des ersten magnetisch wirksamen Körpers (5), entweder kein erstes Auf-Zu-Ventil (15) oder genau ein erstes Auf-Zu-Ventil (15) oder genau zwei erste Auf-Zu-Ventile (15) geöffnet sind.

8. Gasventileinheit nach einem der Ansprüche 5 bis 7, **dadurch gekennzeichnet, dass** in Abhängigkeit von der Position des zweiten magnetisch wirksamen Körpers (6), entweder kein zweites Auf-Zu-Ventil (16) oder genau ein zweites Auf-Zu-Ventil (16) oder genau zwei zweite Auf-Zu-Ventile(16) geöffnet sind.

9. Gasventileinheit nach einem der Ansprüche 6 bis 8, **dadurch gekennzeichnet, dass** die Bewegungsvorrichtung derart ausgeführt ist, dass bei einer Schaltposition der Gasventileinheit, in der mindestens ein erstes Auf-Zu-Ventil (15) geöffnet ist und alle zweiten Auf-Zu-Ventile (16) geschlossen sind, der zweite magnetisch wirksame Körper (6) synchron zu dem ersten magnetisch wirksamen Körper (5) bewegt wird.

10. Gasventileinheit nach einem der Ansprüche 6 bis 9, **dadurch gekennzeichnet, dass** die Bewegungsvorrichtung derart ausgeführt ist, dass bei einer Schaltposition der Gasventileinheit, in der mindestens ein zweites Auf-Zu-Ventil (16) geöffnet ist, der erste magnetisch wirksame Körper (5) bei einer Bewegung des zweiten magnetisch wirksamen Körpers (6) nicht mitbewegt wird.

11. Gasventileinheit nach einem der Ansprüche 6 bis 10, **dadurch gekennzeichnet, dass** die Bewegungsvorrichtung derart ausgeführt ist, dass bei zumindest einem geöffneten zweiten Auf-Zu-Ventil (16) gleichzeitig mindestens ein erstes Auf-Zu-Ventil (15), vorzugsweise genau ein erstes Auf-Zu-Ventil (15) geöffnet ist.

12. Gasventileinheit nach einem der Ansprüche 3 bis 11, **dadurch gekennzeichnet, dass** die Gasventileinheit eine zweite Drosselstrecke umfasst, in der die zweiten Drosselstellen (18) in Reihe angeordnet sind und die jeweils zwischen zwei benachbarten zweiten Drosselstellen (18) einen Verbindungsabschnitt aufweisen, welchen ein zweites Auf-Zu-Ventil (16) in geöffnetem Zustand mit dem Gaseingang (3) verbindet.

13. Gasventileinheit nach Anspruch 1 oder 12, **dadurch gekennzeichnet, dass** die Drosselstellen (17) der ersten Drosselstrecke - in Gasströmungsrichtung in der ersten Drosselstrecke betrachtet - einen zunehmenden Strömungsquerschnitt aufweisen.

14. Gasventileinheit nach Anspruch 12 oder 13, **dadurch gekennzeichnet, dass** die Drosselstellen (18) der zweiten Drosselstrecke - in Gasströmungsrichtung in der zweiten Drosselstrecke betrachtet - einen zunehmenden Strömungsquerschnitt aufweisen.

## Claims

1. Gas valve unit for adjusting gas volume flows in a dual circuit gas burner (1) of a gas appliance, especially of a gas cooking appliance, wherein the gas valve unit has a gas inlet (3) and two gas outlets (11, 12), **characterised in that** the gas volume flow supplied to a first gas outlet (11) can be adjusted in a number of stages and that the gas volume flow supplied to a second gas outlet (12) can be adjusted in a number of stages, **characterised in that** the gas valve unit, for adjusting the gas volume flow supplied to the first gas outlet (11), has at least two first on-off valves (15) and at least two first throttle points (17), the gas valve unit has a first throttle path in which the first throttle points (17) are disposed in series and which each have a connecting section disposed between two adjacent first throttle points, which connects a first on-off valve (15) in the opened state to the gas inlet (3).

2. Gas valve unit according to claim 1, **characterised in that** the gas valve unit, for adjusting the gas volume flow supplied to the first gas outlet (11), has at least three first on-off valves (15) and at least three first throttle points (17).

3. Gas valve unit according to claim 1 or 2, **characterised in that** the gas valve unit, for adjusting the gas volume flow supplied to the second gas outlet (12), has at least two second on-off valves (16) and at least two second throttle points (18), preferably at least four second on-off valves (16) and at least four second throttle points (18).

4. Gas valve unit according to claim 2 or 3, **characterised in that**, to control the on-off valves (15, 16), at least one magnetically acting body (5, 6), preferably at least one permanent magnet, is provided which is able to be moved relative to the on-off valves (15, 16).

5. Gas valve unit according to claim 4, **characterised in that** at least two magnetically acting bodies (5, 6), preferably at least two permanent magnets are provided, wherein a first magnetically acting body (5) is provided for control of the first on-off valves (15) and a second magnetically acting body (6) is provided for control of the second on-off valves (16).

6. Gas valve unit according to claim 4 or 5, **characterised in that** a movement device for moving the at least one magnetically acting body (5, 6) preferably embodied as a permanent magnet relative to the on-off valves (15, 16) is provided such that, starting from a completely closed gas valve unit, by actuating the movement device, first the on-off valves (15) assigned to the first gas outlet (11) are actuated and subsequently the on-off valves (16) assigned to the second gas outlet are actuated.

7. Gas valve unit according to claim 5 or 6, **characterised in that**, depending on the position of the first magnetically acting body (5), either no first on-off valve (15) or precisely one first on-off valve (15) or precisely two first on-off valves (15) are opened.

8. Gas valve unit according to one of claims 5 to 7, **characterised in that**, depending on the position of the second magnetically acting body (6) either no second on-off valve (16) or precisely one second on-off valve (16) or precisely two second on-off valves (16) are opened.

9. Gas valve unit according to one of claims 6 to 8, **characterised in that** the movement device is embodied such that, for a switch position of the gas valve unit in which at least one first on-off valve (15) is opened and all second on-off valves (16) are closed, the second magnetically acting body (6) is moved synchronously to the first magnetically acting body (5).

10. Gas valve unit according to one of claims 6 to 9, **characterised in that** the movement device is embodied such that, for a switch position of the gas valve unit in which at least one second on-off valve (16) is opened, the first magnetically acting body (5) is not moved as well during a movement of the second magnetically acting body (6).

11. Gas valve unit according to one of claims 6 to 10, **characterised in that** the movement device is embodied such that, for at least one open second on-off valve (16) simultaneously at least one first on-off valve (15), preferably precisely one first on-off valve (15) is opened.

12. Gas valve unit according to one of claims 3 to 11, **characterised in that** the gas valve unit comprises a second throttle path in which the second throttle points (18) are disposed in series and which each have a connecting section between two adjacent second throttle points (18) which links a second on-off valve (16) in the open state to the gas inlet (3).

13. Gas valve unit according to claim 1 or 12, **characterised in that** the throttle points (17) of the first throttle path - viewed in the gas flow direction in the first throttle path - have an increasing flow cross-section.

14. Gas valve unit according to claim 12 or 13, **characterised in that** the throttle points (18) of the second throttle path - viewed in the gas flow direction in the second throttle path - have an increasing flow cross-section.

## Revendications

1. Unité vanne à gaz servant à régler des flux volumiques de gaz fournis à un brûleur à gaz à deux circuits (1) d'un appareil à gaz, en particulier d'une gazinière, l'unité vanne à gaz comportant une entrée de gaz (3) et deux sorties de gaz (11, 12), le flux volumique de gaz amené à une première sortie de gaz (11) étant réglable en plusieurs niveaux et le flux volumique de gaz amené à une deuxième sortie de gaz (12) étant également réglable en plusieurs niveaux, **caractérisé en ce que** l'unité vanne à gaz comporte pour le réglage du flux volumique de gaz amené à la première sortie de gaz (11) au moins deux premières vannes d'ouverture/fermeture (15) et au moins deux premiers points d'étranglement (17), **en ce que** l'unité vanne à gaz comprend un premier tronçon d'étranglement dans lequel les premiers points d'étranglement (17) sont alignés et qui comporte, entre deux premiers points d'étranglement (17) voisins, une portion de liaison qu'une première vanne d'ouverture/fermeture (15) en position ouverte relie à l'entrée de gaz (3).

2. Unité vanne à gaz selon la revendication 1, **caractérisée en ce que** l'unité vanne à gaz comporte pour le réglage du flux volumique de gaz amené à la première sortie de gaz (11) au moins trois premières vannes d'ouverture/fermeture (15) et au moins trois premiers points d'étranglement (17).

3. Unité vanne à gaz selon la revendication 1 ou 2, **caractérisée en ce que** l'unité vanne à gaz comporte pour le réglage du flux volumique de gaz amené à la deuxième sortie de gaz (12) au moins deux deuxièmes vannes d'ouverture/fermeture (16) et au moins deux deuxièmes points d'étranglement (18), de préférence au moins quatre deuxièmes vannes d'ouverture/fermeture (16) et au moins quatre deuxièmes points d'étranglement (18).

4. Unité vanne à gaz selon la revendication 2 ou 3, **caractérisée en ce que** pour commander les vannes d'ouverture/fermeture (15, 16), il est prévu au moins un corps à action magnétique (5, 6), de préférence au moins un aimant permanent, qui peut être déplacé par rapport aux vannes d'ouverture/fermeture (15, 16).

5. Unité vanne à gaz selon la revendication 4, **caractérisée en ce qu'**il est prévu au moins deux corps à action magnétique (5, 6), de préférence au moins deux aimants permanents, un premier corps à action magnétique (5) étant prévu pour commander les premières vannes d'ouverture/fermeture (15) et un deuxième corps à action magnétique (6) étant prévu pour commander les deuxièmes vannes d'ouverture/fermeture (16).

6. Unité vanne à gaz selon la revendication 4 ou 5, **caractérisée en ce qu'**il est prévu un dispositif de déplacement permettant de déplacer le au moins un corps à action magnétique (5, 6), réalisé de préférence comme aimant permanent, par rapport aux vannes d'ouverture/fermeture (15, 16), de telle sorte que, dans l'hypothèse d'une unité vanne à gaz complètement fermée, l'actionnement du dispositif de déplacement provoque d'abord l'actionnement des vannes d'ouverture/fermeture (15) associées à la première sortie de gaz (11) et ensuite l'actionnement des vannes d'ouverture/fermeture (16) associées à la deuxième sortie de gaz.

7. Unité vanne à gaz selon la revendication 5 ou 6, **caractérisée en ce que**, en fonction de la position du premier corps à action magnétique (5), une première vanne d'ouverture/fermeture (15) n'est pas ouverte ou exactement une première vanne d'ouverture/fermeture (15) est ouverte ou exactement deux premières vannes d'ouverture/fermeture (15) sont ouvertes.

8. Unité vanne à gaz selon l'une des revendications 5 à 7, **caractérisée en ce que**, en fonction de la position du deuxième corps à action magnétique (6), une deuxième vanne d'ouverture/fermeture (16) n'est pas ouverte ou précisément une deuxième vanne d'ouverture/fermeture (16) est ouverte ou précisément deux deuxièmes vannes d'ouverture/fermeture (16) sont ouvertes.

9. Unité vanne à gaz selon l'une des revendications 6 à 8, **caractérisée en ce que** le dispositif de déplacement est conçu d'une manière telle que lorsque l'unité vanne à gaz est dans une position de commutation dans laquelle au moins une première vanne d'ouverture/fermeture (15) est ouverte et toutes les deuxièmes vannes d'ouverture/fermeture (16) sont fermées, le deuxième corps à action magnétique (6) est déplacé de manière synchrone avec le premier corps à action magnétique (5).

10. Unité vanne à gaz selon l'une des revendications 6 à 9, **caractérisée en ce que** le dispositif de déplacement est conçu d'une manière telle que lorsque l'unité vanne à gaz est dans une position de commutation dans laquelle au moins une deuxième vanne d'ouverture/fermeture (16) est ouverte, le premier corps à action magnétique (5) n'est pas déplacé avec le deuxième corps à action magnétique (6) lors d'un déplacement de celui-ci.

11. Unité vanne à gaz selon l'une des revendications 6 à 10, **caractérisée en ce que** le dispositif de déplacement est conçu d'une manière telle que lorsque au moins une deuxième vanne d'ouverture/fermeture (16) est ouverte, au moins une première vanne d'ouverture/fermeture (15), de préférence exactement une première vanne d'ouverture/fermeture (15), est ouverte en même temps.

12. Unité vanne à gaz selon l'une des revendications 3 à 11, **caractérisée en ce que** l'unité vanne à gaz comprend un deuxième tronçon d'étranglement dans lequel les deuxièmes points d'étranglement (18) sont alignés et qui comporte, entre deux deuxièmes points d'étranglement (18) voisins, une portion de liaison qu'une deuxième vanne d'ouverture/fermeture (16) en position ouverte relie à l'entrée de gaz (3).

13. Unité vanne à gaz selon la revendication 1 ou 12, **caractérisée en ce que** les points d'étranglement (17) du premier tronçon d'étranglement, vus dans le sens d'écoulement du gaz dans le premier tronçon d'étranglement, présentent une section d'écoulement croissante.

14. Unité vanne à gaz selon la revendication 12 ou 13, **caractérisée en ce que** les points d'étranglement (18) du deuxième tronçon d'étranglement, vus dans le sens d'écoulement du gaz dans le deuxième tronçon d'étranglement, présentent une section d'écoulement croissante.
